# EUROPÄISCHE PATENTSCHRIFT

(11) **EP 2 241 666 B1**
(45) Veröffentlichungstag und Bekanntmachung des Hinweises auf die Patenterteilung: **23.11.2011**
(21) Anmeldenummer: 10007272.7
(22) Anmeldetag: 06.10.2004
(51) Int. Cl.: D06F 37/26, D06F 23/02, B29C 45/14

(54) **Verfahren zur Herstellung eines Waschaggregats mit einem Laugenbehälter aus Kunststoff**
Method for manufacturing a washing unit for a washing machine with a plastic tub
Procédé de fabrication d'un groupe de lavage pour une machine à laver avec une cuve en plastique

(30) Priorität: 29.10.2003 DE 10350793; 29.10.2003 DE 10350794
(43) Veröffentlichungstag der Anmeldung: 20.10.2010
(62) Teilanmeldung aus: 04023746.3
(73) Patentinhaber: Miele & Cie. KG, 33332 Gütersloh (DE)
(72) Erfinder: Eckert, Norbert, 33102 Paderborn (DE); Hollenhorst, Matthias, 59556 Lippstadt (DE); Kratzsch, Andreas, Dr., 33719 Bielefeld (DE); Krimpmann, Michael, 33378 Rheda-Wiedenbrück (DE); Maaß, Heinz, 33378 Rheda-Wiedenbrück (DE); Mancini, Stefano, 60035 Jesi (Ancona) (IT); Nieder, Antje, 33332 Gütersloh (DE)

(56) Entgegenhaltungen:
- EP-A2- 0 374 519
- DE-A1- 4 011 653
- DE-A1- 4 041 324
- DE-A1- 10 216 517
- DE-A1- 19 911 139
- DE-A1- 19 960 501
- DE-U1- 8 622 028
- DE-U1- 29 821 140
- GB-A- 2 272 913

## Beschreibung

Die Erfindung betrifft ein Verfahren zur Herstellung eines Waschaggregats für eine Waschmaschine mit einem im wesentlichen hohlzylinderförmigen Laugenbehälter, bestehend aus zwei Stirnflächen und einem Mantel, mit einer im Laugenbehälter angeordneten, um eine horizontale oder schräge Achse drehbaren, ebenfalls hohlzylindrischen Trommel, und mit einem im Bereich einer Stirnfläche angeordneten Tragkontur, in dessen Zentrum ein Lagersitz zur fliegenden Lagerung der Trommel durch Aufnahme eines mit ihr verbundenen Wellenzapfens angeordnet ist.

Waschmaschinen mit einem Waschaggregat, bei dem der Laugenbehälter aus Edelstahl-Blech hergestellt ist, sind beispielsweise aus der DE-OS 2719 336 bekannt. Edelstahl-Laugenbehälter kommen auch bei den von der Anmelderin hergestellten und vertriebenen Waschmaschinen zum Einsatz. Zur fliegenden Lagerung der Trommel besitzen diese einen Wellenzapfen, welcher von zwei voneinander beabstandeten Lagern aufgenommen wird. Diese beiden Lager sind in einem hülsenförmigen Lagersitz angeordnet. Bei den vorgenannten Waschmaschinen dient zur Halterung und Befestigung des Lagersitzes am Laugenbehälter ein Tragkreuz aus Gusseisen. Trag- oder Lagerkreuz inklusive Lagersitz und Laugenbehälter werden als getrennte Bauteile hergestellt und nachträglich durch Schrauben oder Klemmringe verbunden. Aus der DE 199 11 139 A1 ist ein Aggregat bekannt, bei dem die Tragkontur an der stirnseitigen Rückwand angeschraubt ist.

Seit einiger Zeit wird bei der Herstellung von Laugenbehältern Kunststoff - meist glasfaserverstärkt - anstelle von Blech verwendet. Waschmaschinen mit Kunststoff-Laugenbehältern sind beispielsweise aus der EP 0 043 429 A1, der EP 0 374 519 A2, der GB 2 272 913 A und der DE 298 21 140 U1 bekannt. Bei den bekannten Waschmaschinen ist es üblich, ein zylindrisches Lagergehäuse aus Metall (i. d. R. eine spanend bearbeitete Gusseisenkonstruktion) als Lagersitz zu verwenden und dieses bei der Herstellung des Laugenbehälter-Bodens mit Kunststoff zu umspritzen. Daneben ist es aus der DE 100 40 319 C1 bekannt, auf einen Lagersitz aus Metall zu verzichten und die Lager mit Kunststoff zu umspritzen. Varianten, bei denen wie beim Edelstahl-Laugenbehälter ein Tragkreuz separat gefertigt und am Laugenbehälter befestigt wird, sind nicht bekannt und nicht zweckmäßig, da die Koppelstellen aus nachstehend erläuterten Gründen sehr hoch belastet werden, was zu einem Reißen des Kunststoffs führen kann.

Die deutsche Offenlegungsschrift DE 199 60 501 A1 offenbart einen Laugenbehälter aus Kunststoff, der ein zylindrisches Lagergehäuse enthält. Dieses Lagergehäuse enthält einen zusätzlichen rotationssymmetrischen Kragen, der zur Aufnahme und Befestigung eines Stators für einen Direktantrieb dient. Die Umspritzung des Kunststoffs erstreckt sich hierbei jedoch nur bis zur äußeren Kante, bzw. des äußeren Endes des Kragens. Da dieses Lagergehäuse mit integriertem Statortragteil nur einen geringen Durchmesser aufweist, überträgt es sehr große Kräfte auf die Rückwand des Laugenbehälters, was mit hohem konstruktiven Aufwand, wie Verstärkungsrippen kompensiert werden muss. Auch die Wärmeableitung des Lagers ist nicht vorteilhaft gewährleistet, so dass es zu Temperaturspitzen bzw. starken Temperaturunterschieden innerhalb der Rückwand des Laugenbehälters kommen kann.

Bei den heute üblichen hohen Schleuderdrehzahlen von bis zu 1800 min-1 kommt es im Bereich der Lager durch Reibung zu einer Erhitzung auf Temperaturen um 100 °C. Die so erzeugte Wärmeenergie wird bei den bekannten Waschaggregaten mit Kunststoff-Laugenbehälter entweder über das Lagergehäuse oder direkt an den Laugenbehälter-Boden abgegeben. Dadurch kann es zu Materialschäden und zu einem Lockern der Verbindung zwischen Metall und Kunststoff kommen. Außerdem führen die hohen Drehzahlen bei Unwuchten, welche durch unsymmetrische Wäscheverteilung in der Trommel erzeugt werden, zu hohen Biegekräften, die über die Lager in den Laugenbehälter-Boden eingeleitet werden. Auch dies kann den Boden selbst oder seine Verbindung mit dem Lagergehäuse und mit dem Laugenbehältermantel schädigen.

Die deutsche Offenlegungsschrift DE 102 16 517 A1 offenbart ein Verfahren zur Herstellung eines Laugenbottichs aus Kunststoff. Hierbei werden mechanische Funktionsteile in die Spritzgussform eingelegt und durch Umspritzen am Laugenbottich angebracht. Zum genauen und zuverlässigen Positionierung von mechanischen Funktionsteilen sind jedoch weitere Maßnahmen notwendig.

Aus der DE 86 22 028 U1 ist es bekannt, einen zu ummantelnden Kern in einer Spritzgießform zu zentrieren. Hierbei werden Abstandshalter in der Form eingesetzt, wodurch beim Spritzgießen das Formteil mit einem gleichmäßigen Kunststoffüberzug versehen werden kann

Der Erfindung stellt sich somit das Problem, ein einfaches und rationelles Verfahren zur Herstellung eines solchen Waschaggregats zu offenbaren.

Erfindungsgemäß wird dieses Problem durch ein Verfahren mit den Merkmalen des unabhängigen Patentanspruchs 1 gelöst. Vorteilhafte Ausgestaltungen und Weiterbildungen der Erfindung ergeben sich aus den nachfolgenden abhängigen Ansprüchen.

Die mit der Erfindung erreichbaren Vorteile bestehen neben einer guten Wärme- und Kraftableitung aus dem Bereich der Lager in einer Erhöhung der Festigkeit des Laugenbehälter-Bodens. Hierdurch kann auf die bei Serien-Waschmaschinen mit Kunststoff-Laugenbehältern üblichen Versteifungsstreben verzichtet werden, was zu einer Materialeinsparung führt. Außerdem kann die aus der EP 0 043 429 A1 bekannte, bei Serien-Waschmaschinen ebenfalls übliche Versteifung des Bodens durch unterschiedlich tiefe Sektoren entfallen und in einer vorteilhaften Ausführungsform die zum Laugenbehälterinneren gerichtete Seite der Stirnfläche annähernd eben ausgebildet werden. Hierdurch werden Geräusche vermieden, die bei der Bewegung der Waschflotte in den durch die tieferen Sektoren gebildeten Taschen entstehen. Die Tragkontur besitzt im Einbauzustand zumindest einen oder mehrere radial verlaufende Arme, bezogen auf die Fläche des Laugenbehälter-Bodens.

Bei zweckmäßigen Ausführungsformen des Verfahrens kann vor dem Einlegen der Tragkontur in die Spritzgussform eine spanende Bearbeitung des Lagersitzes erfolgen und die das Tragkreuz enthaltende Stirnfläche (der Laugenbehälter-Boden) und der Mantel des Laugenbehälters einstückig hergestellt werden. Das so hergestellte Bauteil kann auf einfache Weise durch die fehlende Stirnfläche komplettiert werden, wobei zu deren Herstellung mindestens ein Ausgleichsgewicht mit einem insbesondere glasfaserverstärkten Kunststoff derart umspritzt werden kann, dass das(die) Ausgleichsgewicht(e) wenigstens annähernd vollständig in das Material der Stirnfläche eingebettet ist(sind). Alternativ ist eine Verwendung von zwei separaten Bauteilen - Boden und Ausgleichsgewichte - möglich.

In einer weiteren vorteilhaften Ausführungsform des Verfahrens wird zur Herstellung einer Abflussbohrung im Bereich der Dichtungsanordnung für den Wellenzapfen der Trommel ein Kern in die genannte Abflussbohrung eingefügt, wobei ein Ende des Kernes aus dem der Dichtungsanordnung gegenüberliegenden Ende der Abflussbohrung herausragt. Nach dem Umspritzen des Lagergehäuses mit Kunststoff wird der Kern entfernt, wodurch eine durchgängige Abflussbohrung bereitgestellt wird. Es ist hierbei zweckmäßig, eine weitere Abflussbohrung im Bereich zwischen den Radial-Wälzlagern anzuordnen.

In einer weiteren Ausführungsform des Verfahrens hat der eingeführte Kern einen geringeren Durchmesser als die Abflussbohrung im Lagergehäuse, so dass zwischen Kern und Innenwandung der Bohrung ein Kunststoffüberzug hergestellt wird. In einer weiteren Ausführungsform hat die Abflussbohrung im Lagergehäuse in einem äußeren Bereich einen größeren Durchmesser und in einem inneren Bereich einen kleineren Durchmesser. Der in die Bohrung eingeführte Kern ist hierbei so bemessen, dass beim Umspritzen der Kunststoff nur in den äußeren Bereich zwischen Kern und innerer Wandung der Abflussbohrung im Lagergehäuse gelangt, wobei der innere Bereich nicht mit Kunststoff überzogen wird.

Ein Ausführungsbeispiel der Erfindung ist in den Zeichnungen rein schematisch dargestellt und wird nachfolgend näher beschrieben. Es zeigen
- Figur 1: die perspektivische Rückansicht eines Laugenbehälters (1) mit integrierter Tragkontur;
- Figur 2: die Tragkontur als Einzelheit;
- Figur 3: einen Schnitt durch die Seitenansicht des Laugenbehälters (1);
- Figur 4: die perspektivische Vorderansicht des Laugenbehälters (1);
- Figur 5: die Lageranordnung eines Waschaggregats für eine Waschmaschine in der Seitenansicht im Schnitt und
- Figur 6 + 7: eine Detailansicht der Abflussbohrungen in der Seitenansicht im Schnitt.

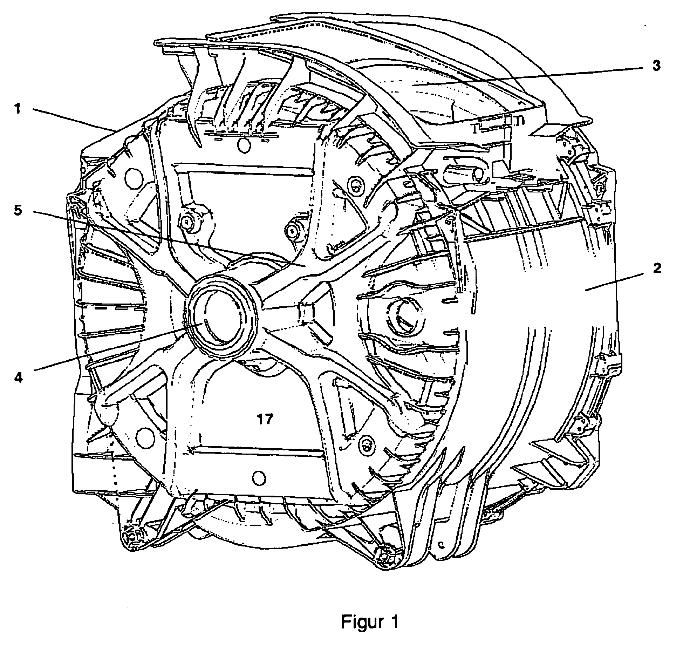

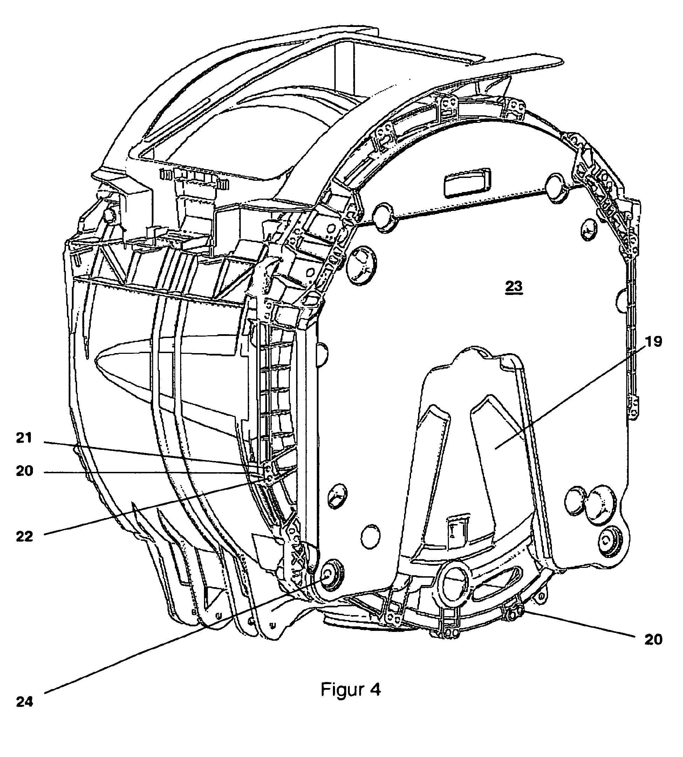

Der in Figur 1 dargestellte Laugenbehälter (1) kommt in dem Waschaggregat einer mantelbeschickbaren Waschmaschine, einem sogenannten Toplader zum Einsatz. Aus diesem Grund ist der Laugenbehältermantel (2) mit einer Öffnung (3) versehen, welche mit der Öffnung im Mantel einer in den Zeichnungen nicht dargestellten Trommel korrespondiert. Bei Verwendung des Laugenbehälters im Waschaggregat einer frontbeschickbaren Waschmaschine, einem sogenannten Frontlader, ist die Öffnung in der vorderen Deckfläche angeordnet (beim Toplader geschlossen, s. Figur 4).

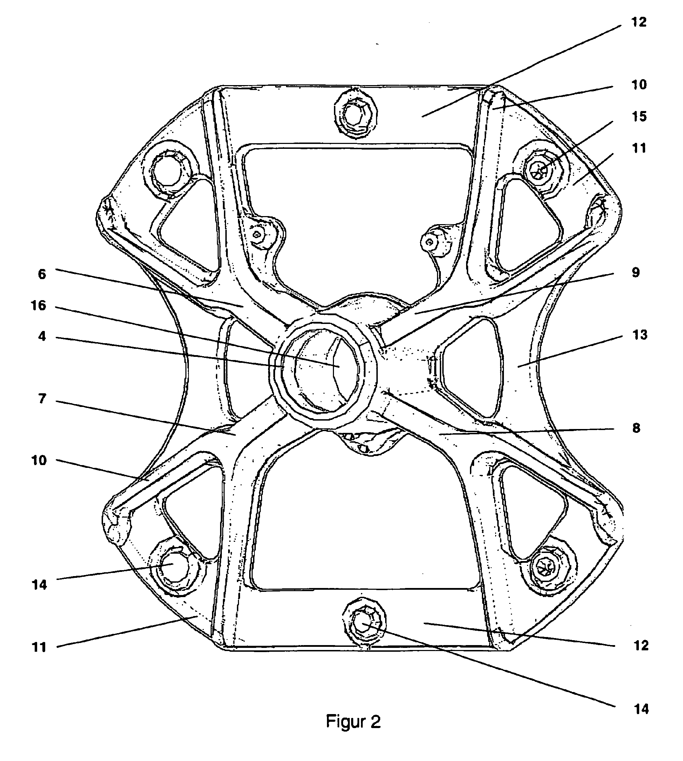

Zur fliegenden Lagerung besitzt die Trommel in bekannter Weise einen Wellenzapfen, welcher von zwei voneinander beabstandeten Lagern aufgenommen wird (nicht dargestellt). Diese beiden Lager sind in einem hülsenförmigen Lagersitz (4) angeordnet, welcher sich im Zentrum einer in Figur 2 dargestellten Tragkontur (5) befindet. Die Tragkontur (5) besitzt zumindest einen oder mehrere radial verlaufende Arme, wobei in einer vorteilhaften Ausführungsform die Tragkontur (5) vier Arme (6, 7, 8, 9) besitzt, von denen im Einbauzustand jeweils zwei diagonal verlaufen. Im Endbereich weisen alle vier Arme (6, 7, 8, 9) Verzweigungen (10) auf, deren Enden jeweils durch radial nach außen gekrümmte Streben (11) miteinander verbunden sind. Darüber hinaus sind auch die beiden oberen Arme (6, 9) und die beiden unteren Arme (7, 8) jeweils durch gerade Streben (12) verbunden. Zwischen den beiden linken Armen (6, 7) und den beiden rechten Armen (8, 9) sind nach innen gekrümmte Streben (13) angeordnet. Auf diese Weise wird durch die Streben (11, 12, 13) der geschlossene Umfang der Tragkontur (5) gebildet, welcher durch zwei jeweils diagonal verlaufende Armpaare (6, 8 bzw. 7, 9) geschnitten wird und im Zentrum den Lagersitz (4) trägt. Die Streben 11 und 12 und die beiden oberen Arme (6, 9) sind mit Lageransätzen (14) oder Zentrieransätzen (15) versehen deren Funktion später erklärt ist. Die gesamte Tragkontur (5) wird als einstückiges Formteil aus Gusseisen hergestellt. Im Bereich der Bohrung (16), die den Lagersitz (4) bildet, erfolgt nach dem Gießen eine spanende Bearbeitung, um die Passung für die Lager genau zu definieren.

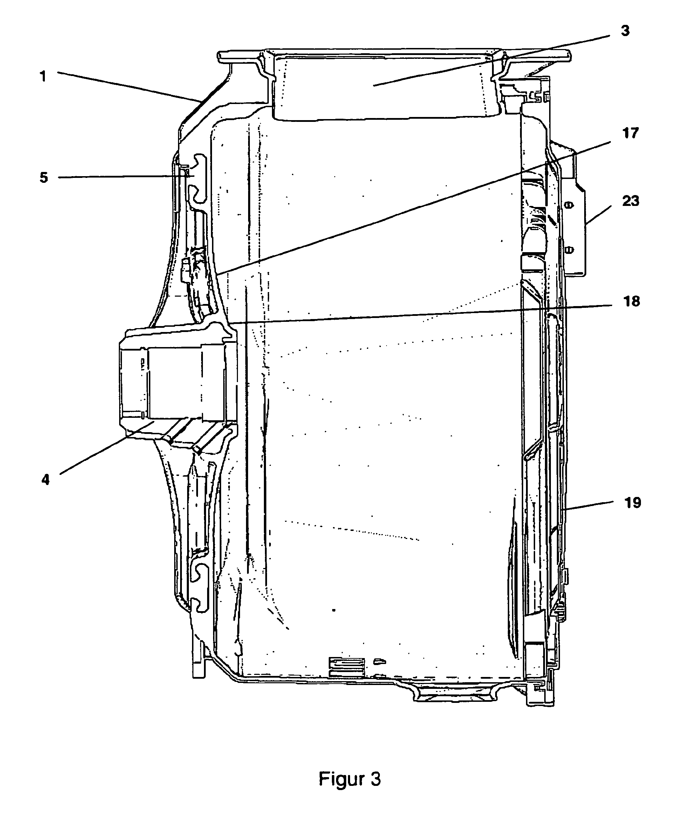

Die vorbeschriebene Tragkontur (5) wird in eine Spritzgussform (nicht dargestellt) eingelegt. Zur lagegenauen Fixierung wird die Bohrung (16) auf einen Dorn (nicht dargestellt) gesteckt, die Zentrieransätze (15) dienen zur winkelgenauen Fixierung und die Lageransätze (14) verhindern ein Kippen der Kontur (5) in der Form. Anschließend wird die Form nahezu vollständig mit einem glasfaserverstärkten Kunststoff umspritzt, nur die Lager- und Zentrieransätze und die Bohrung (16) bleiben frei. Auf diese Weise wird ein einstückiger Bottich hergestellt, welcher den Mantel (2) und als erste Stirnfläche den Boden (17) des Laugenbehälters (1) bildet, wobei die Kontur (5) vollständig bis auf die vorgenannten Ausnahmen in das Material des Bodens (17) eingebettet ist. Figur 3 zeigt in einem Schnitt die Einbettung der Kontur (5). Hier ist außerdem zu sehen, dass die Innenfläche des Bodens (17) bis auf eine Auswölbung (18) im Bereich des Lagersitzes (4) eben ist.

Der Bottich wird durch eine in Figur 4 dargestellte Frontkappe (19), die dann die zweite Stirnfläche bildet, zu einem Laugenbehälter (1) komplettiert. Zur gegenseitigen Befestigung der beiden Teile sind Schraubdome (20) vorgesehen. Dabei hat es sich als vorteilhaft erwiesen, für jede Befestigungsstelle Dome (20) mit zwei Gewindebohrungen (21, 22) vorzusehen. Hierdurch ist auch nach einer Beschädigung des Gewindes (21) in einem Dorn (20) - etwa nach mehrmaligem Lösen der Schrauben - eine sichere und dichte Verbindung von Bottich und Frontkappe durch Verwendung des zweiten Gewindes (22) möglich.

An der Frontkappe (19) ist ein hufeisenförmiges Ausgleichsgewicht (23), vorteilhafterweise auch aus Gusseisen hergestellt, über weitere Schraubdome (24) befestigt. In einer in den Zeichnungen nicht dargestellten Ausführungsform kann anstatt des geteilten Aufbaus das Ausgleichsgewicht ähnlich wie die Tragkontur umspritzt werden und so von dem Material der Frontkappe eingebettet werden. Hierdurch entfällt die separate Befestigung.

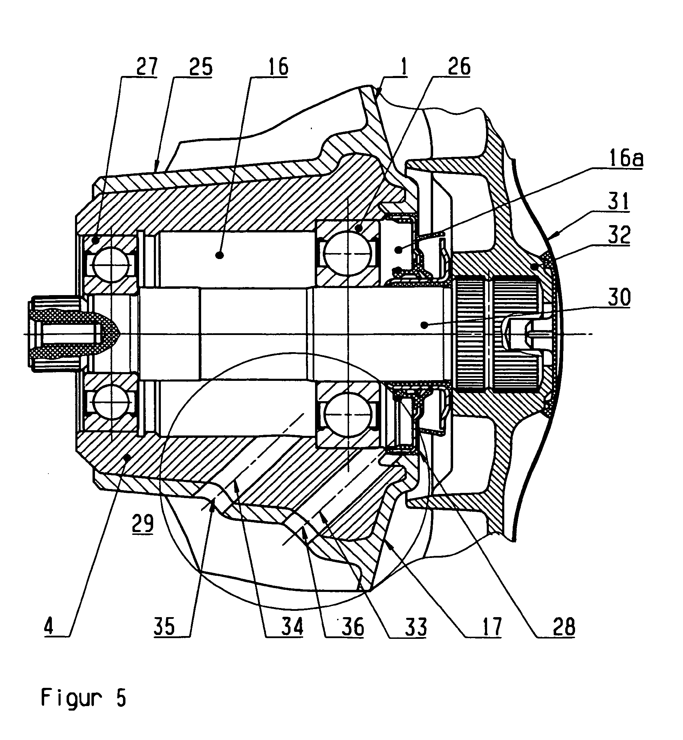

Ein weiteres Ausführungsbeispiel der Erfindung ist in der Figur 5 rein schematisch dargestellt und wird nachfolgend näher beschrieben. Die Figur 5 zeigt die Lageranordnung eines Waschaggregats für eine Waschmaschine in der Seitenansicht im Schnitt. Das Waschaggregat besitzt einen im Wesentlichen zylindrischen Laugenbehälter (1) und eine darin drehbar gelagerte, ebenfalls zylindrische Trommel (31) zur Aufnahme der Wäsche (nicht dargestellt). Der Laugenbehälter (1) ist aus laugenbeständigem Kunststoff hergestellt und besitzt im Zentrum seines Bodens (17) eine Öffnung (16), hinter der ein Lagergehäuse (4) angeordnet ist. Letzteres wird von einem nicht dargestellten Lagerkreuz getragen. Die Verbindung von Lagerkreuz und Lagergehäuse (4) mit dem Laugenbehälter (1) ist ein Teil des an späterer Stelle beschriebenen Herstellungsverfahrens. Ein mit der Trommel (31) über einen Flansch (32) verbundener Wellenzapfen (30) ist durch die Öffnung (16) hindurch geführt. Die Lagerung für die Trommel besteht aus einem vorderen und einem hinteren Radialkugellager (26, 27), die durch Presspassung in der Aufnahmebohrung (16) des Lagergehäuses (4) fixiert sind und den Wellenzapfen (30) aufnehmen. Das vordere Lager (26) wird durch einen Radialwellendichtring (28) geschützt, der in die vor dem Lagergehäuse (4) befindliche Öffnung (16a) des Laugenbehälterbodens (17) eingesetzt ist. Im Lagergehäuse (4) befinden sich zwei durchgängige Abflussbohrungen (33, 34), von denen die eine (33) im Bereich des Radialwellendichtrings (28) und die andere (34) zwischen den beiden Lagern (27, 28) in die Aufnahmebohrung (16) mündet.

Zur Herstellung des Laugenbehälters wird zunächst das Lagergehäuse (4) mit den beiden Abflussbohrungen (33, 34) versehen. Anschließend wird die Kontur (5) als Einheit, aus Lagerkreuz und Lagergehäuse in die Kavität eines Spritzgießwerkzeugs (nicht dargestellt) eingelegt, welche die Außenkontur eines Bottichs bestimmt. Dieser Bottich besteht aus dem Mantel (2) und dem Boden (17) des Laugenbehälters (1). Zur lagegenauen Fixierung wird die Aufnahmebohrung (16) auf einen Dorn (nicht dargestellt) gesteckt. In die beiden Abflussbohrungen (33, 34) im Lagergehäuse (4) werden zwei Kerne (nicht dargestellt) gefahren, deren Enden aus dem dem Radialwellendichtring (28) gegenüberliegenden Ende herausragen. Anschließend werden Lagergehäuse (4), Kerne und Lagerkreuz mit einer polymeren Masse aus glasfaserverstärkten Kunststoff umspritzt, nur die Aufnahmebohrung (16) bleibt frei. Auf diese Weise wird der Bottich einstückig hergestellt. Nachdem die eingespritzte polymere Masse (Schmelze) erstarrt ist, wird der vordere und der hintere Kern mit einem Schieber aus der jeweiligen Abflussbohrung (33, 34) herausgezogen und es entstehen in dem das Lagergehäuse (4) umgebenden Kunststoffmantel (25) zwei freie Durchflüsse (35, 36). Hierüber kann angesammeltes Kondenswasser aus der Bohrung (16) in den Außenbereich (29) des Lagergehäuses (4) abgeleitet werden.

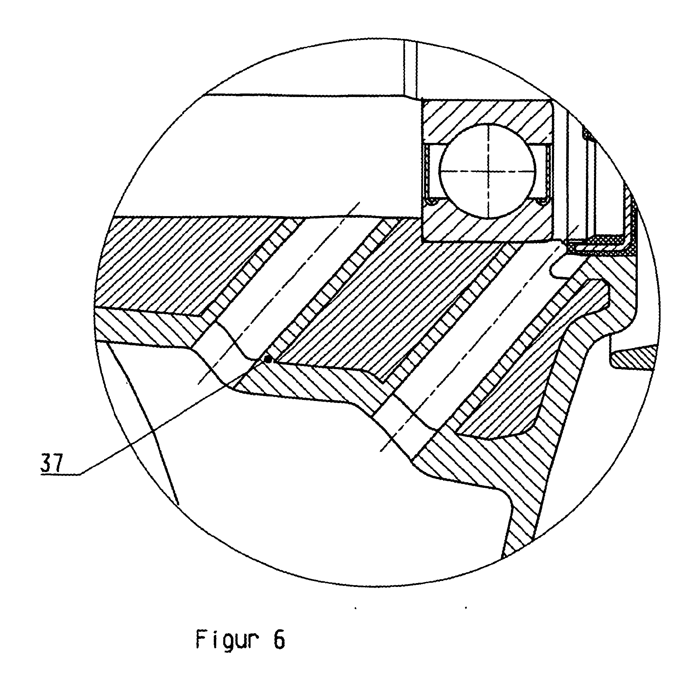

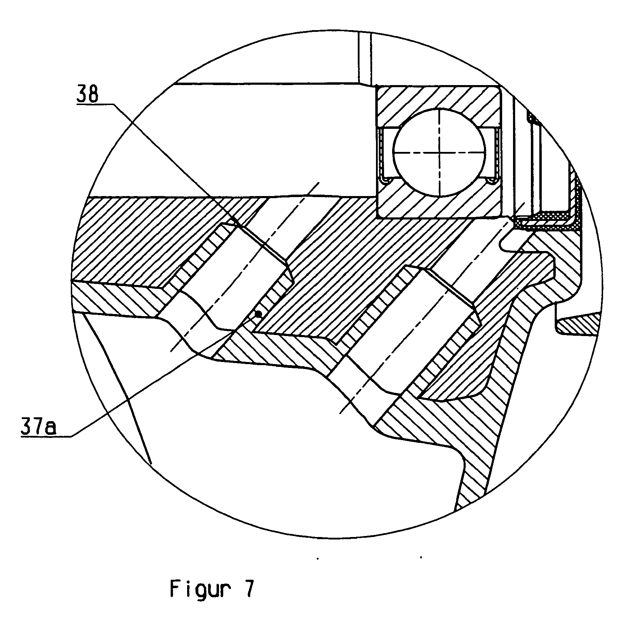

Zur weiteren vorteilhaften Ausgestaltung der Bohrung kann, wie in der Figur 6 dargestellt, die Innenwandung der Bohrung (33, 34) ebenfalls mit Kunststoff (37) überzogen werden. Hierbei hat der Kern einen geringeren Durchmesser, als die Bohrung (33, 34), wobei die Dicke des Kunststoffüberzugs aus der halben Differenz zwischen dem Durchmesser der Bohrung (33, 34) im Lagergehäuse und dem Durchmesser des Kerns bestimmt bzw. festgelegt wird. In Figur 7 ist eine weitere vorteilhafte Ausgestaltung der Bohrung (33, 34) dargestellt, in der die Innenwandung nur in einem Teilbereich mit Kunststoff (37 a) überzogen ist. Hierbei hat die Bohrung (33, 34) im Lagergehäuse in einem vorderen Bereich einen ersten Durchmesser und in einem hinteren Bereich einen zweiten Durchmesser, wobei der erste Durchmesser größer ist, als der zweite Durchmesser. Der Kern wird nur in den ersten Bereich der Bohrung (33, 34) eingeführt und dichtet an dem Versatz (38) zum hinteren Bereich der Bohrung ab. Hierbei hat der Kern einen geringeren Durchmesser, als die Bohrung (33, 34) im ersten Bereich, wobei sich die Dicke des Kunststoffüberzugs aus der halben Differenz zwischen dem ersten Durchmesser der Bohrung (33, 34) im Lagergehäuse und dem Durchmesser des Kerns ergibt.

## Patentansprüche

1. Verfahren zur Herstellung eines Waschaggregats für eine Waschmaschine mit einem im wesentlichen hohlzylinderförmigen Laugenbehälter (1), bestehend aus zwei Stirnflächen (17, 19) und einem Mantel (3), mit einer im Laugenbehälter (1) angeordneten, um eine horizontale oder schräge Achse drehbaren, ebenfalls hohlzylindrischen Trommel, und mit einem im Bereich einer Stirnfläche (17) angeordneten Tragkontur (5), in deren Zentrum ein Lagersitz (4) zur fliegenden Lagerung der Trommel durch Aufnahme eines mit ihr verbundenen Wellenzapfens angeordnet ist, umfassend die Verfahrensschritte:
- Herstellen der Tragkontur (5) als einstückiges Werkteil aus Metall, vorzugsweise aus Gusseisen;
- Herstellen mindestens einer Stirnfläche (17) des Laugenbehälters (1) unter Umspritzen der Tragkontur mit einem insbesondere glasfaserverstärkten Kunststoff derart, dass die Tragkontur (5) wenigstens annähernd vollständig in das Material der Stirnfläche (17) eingebettet ist,
**gekennzeichnet durch** die Schritte:
- Einlegen der Tragkontur (5) in eine Spritzgussform, wobei die Tragkontur (5) zumindest einen oder mehrere radial verlaufende Arme (6, 7, 8, 9) besitzt und die Tragkontur (5) Zentrieransätze (15) zur winkelgenauen Fixierung und Lageransätze (14) zum Verhindern des Kippens in der Spritzgussform enthält, indem die Tragkontur (5) mit den Zentrieransätzen (15) winkelgenau fixiert wird, und mittels der Lageransätze (14) ein Kippen in der Spritzgussform verhindert wird.

2. Verfahren zur Herstellung eines Waschaggregats nach Anspruch 1,
**dadurch gekennzeichnet,**
**dass** die Tragkontur (5) zur lagegenauen Fixierung in der Spritzgussform mit einer den Lagersitz (4) bildenden Bohrung (16) auf einen Dorn gesteckt wird.

3. Verfahren zur Herstellung eines Waschaggregats nach Anspruch 1 oder 2,
**dadurch gekennzeichnet,**
**dass** vor dem Einlegen der Tragkontur (5) in die Spritzgussform eine spanende Bearbeitung des Lagersitzes (4) erfolgt.

4. Verfahren zur Herstellung eines Waschaggregats nach mindestens einem der Ansprüche 1 oder 2,
**dadurch gekennzeichnet,**
**dass** die die Tragkontur (5) enthaltende Stirnfläche (17) und der Mantel (3) des Laugenbehälters einstückig hergestellt werden.

5. Verfahren zur Herstellung eines Waschaggregats nach mindestens einem der Ansprüche 1 bis 4,
**dadurch gekennzeichnet,**
**dass** zur Herstellung der die Tragkontur (5) nicht enthaltenden Stirnfläche (19) mindestens ein Ausgleichsgewicht (23) mit einem insbesondere glasfaserverstärkten Kunststoff derart umspritzt wird, dass das(die) Ausgleichsgewicht(e) (23) wenigstens annähernd vollständig in das Material der Stirnfläche eingebettet ist(sind).

6. Verfahren zur Herstellung eines Waschaggregats mit einem im Bereich einer Stirnfläche (17) angeordneten Tragkontur (5), in deren Zentrum ein Lagergehäuse (4) mit einer Bohrung (16) zur Aufnahme von einem vorderen und einem hinteren Radialkugellager (26, 27) geeignet ist zur fliegenden Lagerung der Trommel durch Aufnahme eines mit ihr verbundenen Wellenzapfens, wobei das vordere Radialkugellager (26) durch einen Radialwellendichtring (28) geschützt ist, nach mindestens einem der Ansprüche 1 bis 5,
**gekennzeichnet durch** folgende Verfahrensschritte:
Einbringen mindestens einer Abflussbohrung (33) in das Lagergehäuse (4),
welche im Bereich des Radialwellendichtring (28) in die Aufnahmebohrung (16) mündet;
Einfügen eines Kernes in die mindestens eine Abflussbohrung (33), wobei ein Ende des Kernes aus dem dem Radialwellendichtring (28) gegenüberliegenden Ende der Abflussbohrung (33) herausragt;
Entfernen des Kernes nach dem Umspritzen des Lagergehäuses (4) mit Kunststoff.

7. Verfahren zur Herstellung eines Waschaggregats nach Anspruch 6, **gekennzeichnet durch** folgende Verfahrensschritte:
Einbringen mindestens einer weiteren Abflussbohrung (34) in das Lagergehäuse (4), welche in den Bereich zwischen den Radialkugellagern (27, 26) in die Aufnahmebohrung (16) mündet;
Einfügen eines Kernes in die mindestens eine weitere Abflussbohrung (34), wobei ein Ende des Kernes aus dem der Bohrung (16) gegenüberliegenden Ende der Abflussbohrung (34) herausragt;
entfernen des Kernes nach dem Umspritzen des Lagergehäuses (4) mit Kunststoff.

8. Verfahren zur Herstellung eines Waschaggregats nach Anspruch 6 oder 7, **dadurch gekennzeichnet,**
**dass** der Kern einen geringeren Durchmesser als die Bohrung (33, 34) im Lagergehäuse aufweist, wobei die Dicke des Kunststoffüberzugs aus der halben Differenz zwischen dem Durchmesser der Bohrung (33, 34) im Lagergehäuse und dem Durchmesser des Kerns bestimmt wird.

9. Verfahren zur Herstellung eines Waschaggregats nach Anspruch 8,
**dadurch gekennzeichnet,**
**dass** die Bohrung (33, 34) im Lagergehäuse in einem vorderen Bereich einen ersten Durchmesser und in einem hinteren Bereich einen zweiten Durchmesser aufweist, wobei der erste Durchmesser größer ist, als der zweite Durchmesser, wobei der Kern in den vorderen Bereich der Bohrung (33, 34) eingeführt wird und an einem Versatz (38) zum hinteren Bereich der Bohrung (33, 34) abdichtet.

## Claims

1. Method for producing a washing unit for a washing machine having a suds container (1) substantially of a hollow cylindrical shape, consisting of two end faces (17, 19) and a skirt (3), having a likewise hollow cylindrical drum, which is arranged in the suds container (1) and rotatable about a horizontal or oblique axis, and having a supporting contour (5) which is arranged in the region of an end face (17) and in the centre of which a mounting seat (4), for floating mounting of the drum by receiving a shaft journal connected thereto, is arranged, comprising the method steps of:
- producing the supporting contour (5) as a single-piece metal component, preferably made of cast iron;
- producing at least one end face (17) of the suds container (1) by extrusion-coating the supporting contour with a plastics material, in particular glass-fibre-reinforced, in such a way that the supporting contour (5) is embedded at least virtually completely in the material of the end face (17),
**characterised by** the steps of:
- laying the supporting contour (5) in an injection mould, the supporting contour (5) having at least one or more radially extending arms (6, 7, 8, 9) and the supporting contour (5) comprising centring shoulders (15) for angularly precise fixing and mounting shoulders (14) for preventing tilting in the injection mould, in that the supporting contour (5) is fixed angularly precisely using the centring shoulders (15) and tilting in the injection mould is prevented by the mounting shoulders (14).

2. Method for producing a washing unit according to claim 1, **characterised in that** for positionally precise fixing in the injection mould the supporting contour (5) is placed on a mandrel by means of a hole (16) forming the mounting seat (4).

3. Method for producing a washing unit according to either claim 1 or claim 2, **characterised in that** the mounting seat (4) is machined by cutting before the supporting contour (5) is laid in the injection mould.

4. Method for producing a washing unit according to at least one of claims 1 and 2, **characterised in that** end face (17), comprising the supporting contour (5), and the skirt (3) of the suds container are formed in a single piece.

5. Method for producing a washing unit according to at least one of claims 1 to 4, **characterised in that**, to produce the end face (19) which does not comprise the supporting contour (5), at least one balancing weight (23) is extrusion coated with a plastics material, in particular glass-fibre-reinforced, in such a way that the balancing weight(s) (23) is/are at least virtually completely embedded in the material of the end face.

6. Method for producing a washing unit having a supporting contour (5) arranged in the region of an end face (17), in the centre of which supporting contour a bearing housing (4) having a hole (16) for receiving a front and a rear radial ball bearing (26, 27) is adapted for floating mounting of the drum by receiving a shaft journal connected thereto, the front radial ball bearing (26) being protected by a radial shaft sealing ring (28), according to at least one of claims 1 to 5, **characterised by** the following method steps:
making at least one outlet hole (33), which opens into the receiving hole (16) in the region of the radial shaft sealing ring (28), in the bearing housing (4),
inserting a core into the at least one outlet hole (33), one end of the core projecting out from the end of the outlet hole (33) opposing the radial shaft sealing ring (28);
removing the core after the bearing housing (4) has been extrusion-coated with plastics material.

7. Method for producing a washing unit according to claim 6, **characterised by** the following method steps:
making at least one further outlet hole (34), which opens into the receiving hole (16) in the region between the radial ball bearings (27, 26), in the bearing housing (4);
inserting a core into the at least one further outlet hole (34), one end of the core projecting out from the end of the outlet hole (34) opposing the hole (16);
removing the core after spraying the bearing housing (4) has been extrusion-coated with plastics material.

8. Method for producing a washing unit according to either claim 6 or claim 7, **characterised in that** the core has a smaller diameter than the hole (33, 34) in the bearing housing, the thickness of the plastics material coating being determined on the basis of half of the difference between the diameter of the hole (33, 34) in the bearing housing and the diameter of the core.

9. Method for producing a washing unit according to claim 8, **characterised in that** the hole (33, 34) in the bearing housing has a first diameter in a front region and a second diameter in a rear region, the first diameter being greater than the second diameter, the core being introduced into the front region of the hole (33, 34) and sealing on an offset (38) from the rear region of the hole (33, 34).

## Revendications

1. Procédé de fabrication d'un groupe de lavage pour une machine à laver avec une cuve de lessivage (1) essentiellement en forme de cylindre creux, composée de deux faces frontales (17, 19) et d'une enveloppe (3), avec un tambour disposé dans la cuve de lessivage (1) et pouvant tourner autour d'un axe horizontal ou oblique, également en forme de cylindre creux, et avec un contour porteur (5) disposé dans la zone d'une face frontale (17) dans le centre duquel est disposé un siège de palier (4) pour supporter le tambour en porte-à-faux par la réception d'un tourillon d'arbre qui lui est raccordé, comprenant les étapes de procédé suivantes :
- fabrication du contour porteur (5) sous forme de pièce en métal, d'un seul tenant, de préférence en fonte ;
- fabrication d'au moins une face frontale (17) de la cuve de lessivage (1) avec enrobage du contour porteur avec une matière plastique en particulier renforcée de fibre de verre de sorte que le contour porteur (5) est noyé au moins approximativement totalement dans le matériau de la face frontale (17),
**caractérisé par** les étapes suivantes :
- insertion du contour porteur (5) dans un moule à injection, le contour porteur (5) possédant au moins un ou plusieurs bras (6, 7, 8, 9) s'étendant radialement, et le contour porteur (5) contenant des rebords de centrage (15) pour la fixation précise au plan angulaire, et des rebords de palier (14) pour empêcher le basculement dans le moule à injection par le fait que le contour porteur (5) est fixé de façon précise au plan angulaire avec les rebords de centrage (15), un basculement dans le moule à injection étant empêché au moyen des rebords de palier (14).

2. Procédé de fabrication d'un groupe de lavage selon la revendication 1,
**caractérisé en ce que**,
pour la fixation, précise au plan de la position, dans le moule à injection, le contour porteur (5) est enfiché sur un mandrin avec un alésage (16) formant le siège de palier (4).

3. Procédé de fabrication d'un groupe de lavage selon la revendication 1 ou 2,
**caractérisé en ce que**,
avant l'insertion du contour porteur (5) dans le moule à injection, il intervient un usinage du siège de palier (4) par enlèvement de matière.

4. Procédé de fabrication d'un groupe de lavage selon au moins l'une des revendications 1 ou 2,
**caractérisé en ce que**
la face frontale (17) contenant le contour porteur (5) et l'enveloppe (3) de la cuve de lessivage sont fabriquées d'une seule pièce.

5. Procédé de fabrication d'un groupe de lavage selon au moins l'une des revendications 1 à 4,
**caractérisé en ce que**,
pour la fabrication de la face frontale (19) ne contenant pas le contour porteur (5), au moins un contrepoids (23) est enrobé d'une matière plastique en particulier renforcée de fibre de verre de sorte que le/les contrepoids (23) est/sont noyés au moins approximativement totalement dans le matériau de la face frontale.

6. Procédé de fabrication d'un groupe de lavage avec un contour porteur (5) disposé dans la zone d'une face frontale (17) et au centre duquel un logement de palier (4) avec un alésage (16) est approprié pour recevoir un roulement à billes radial avant et arrière (26, 27) pour le montage en porte-à-faux du tambour par la réception d'un tourillon d'arbre qui lui est raccordé, le roulement à billes radial avant (26) étant protégé par bague d'étanchéité d'arbre radial (28), selon au moins l'une des revendications 1 à 5,
**caractérisé par** les étapes de procédé suivantes :
mise en place dans le logement de palier (4) d'au moins un alésage d'évacuation (33) qui débouche, dans la zone de la bague à lèvres avec ressort (28), dans l'alésage de réception (16) ;
insertion d'un noyau dans l'alésage d'évacuation (33), au moins au nombre de un, une extrémité du noyau dépassant de l'extrémité de l'alésage d'évacuation (33) qui est opposée à la bague à lèvres avec ressort (28) ;
enlèvement du noyau après l'enrobage du logement de palier (4) avec de la matière plastique.

7. Procédé de fabrication d'un groupe de lavage selon la revendication 6, **caractérisé par** les étapes de procédé suivantes :
mise en place dans le logement de palier (4) d'au moins un autre alésage d'évacuation (34) qui débouche, dans la zone entre les roulements à billes radiaux (26, 27), dans l'alésage de réception (16) ;
insertion d'un noyau dans l'autre alésage d'évacuation (34), au moins au nombre de un, une extrémité du noyau dépassant de l'extrémité de l'alésage d'évacuation (34) qui est opposée à l'alésage (16) ;
enlèvement du noyau après l'enrobage du logement de palier (4) avec de la matière plastique.

8. Procédé de fabrication d'un groupe de lavage selon la revendication 6 ou 7,
**caractérisé en ce que**
le noyau présente un diamètre plus faible que l'alésage (33, 34) dans le logement de palier, l'épaisseur du recouvrement en matière plastique étant définie à partir de la demi-différence entre le diamètre de l'alésage (33, 34) dans le logement de palier et le diamètre du noyau.

9. Procédé de fabrication d'un groupe de lavage selon la revendication 8, **caractérisé en ce que**
l'alésage (33, 34) dans le logement de palier présente, dans une zone avant, un premier diamètre et, dans une zone arrière, un deuxième diamètre, le premier diamètre étant plus grand que le deuxième diamètre, le noyau étant introduit dans la zone avant de l'alésage (33, 34) et assurant une étanchéité sur un déport (38) par rapport à la zone arrière de l'alésage (33, 34).
